(19) Europäisches Patentamt / European Patent Office / Office européen des brevets

(11) **EP 1 636 544 B1**

(12) **EUROPÄISCHE PATENTSCHRIFT**

(45) Veröffentlichungstag und Bekanntmachung des Hinweises auf die Patenterteilung:
**24.10.2012  Patentblatt 2012/43**

(21) Anmeldenummer: **04739482.0**

(22) Anmeldetag: **01.06.2004**

(51) Int Cl.:
***G01C 9/20*** *(2006.01)*

(86) Internationale Anmeldenummer:
**PCT/EP2004/005879**

(87) Internationale Veröffentlichungsnummer:
**WO 2005/001377 (06.01.2005 Gazette 2005/01)**

(54) **OPTISCHER NEIGUNGSMESSER**

OPTICAL INCLINOMETER

INCLINOMETRE OPTIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.06.2003  EP 03101841**

(43) Veröffentlichungstag der Anmeldung:
**22.03.2006  Patentblatt 2006/12**

(73) Patentinhaber: **Leica Geosystems AG**
**9435 Heerbrugg (CH)**

(72) Erfinder:
• **BRAUNECKER, Bernhard**
**CH-9445 Rebstein (CH)**

• **KIPFER, Peter**
**9437 Marbach (CH)**

(74) Vertreter: **Harmann, Bernd-Günther et al**
**Kaminski Harmann**
**Patentanwälte AG**
**Landstrasse 124**
**9490 Vaduz (LI)**

(56) Entgegenhaltungen:
**DE-A- 19 621 189    DE-A- 19 800 844**
**US-A- 4 239 392    US-A- 6 088 090**

**Beschreibung**

Die Erfindung betrifft einen optischen Neigungsmesser nach dem Oberbegriff des Anspruchs 1, ein Verfahren zur Messung der Neigung eines Gerätes nach dem Oberbegriff des Anspruchs 13 sowie ein geodätisches Gerät mit einem solchen Neigungsmesser, und ein Verfahren zur Kompensation von Vibrationen und/oder statistischen Fluktuationen.

Neigungsmesser verschiedener Bauarten finden seit langer Zeit Anwendung in allen Bereichen, in denen die Lage eines Gerätes berücksichtigt werden muss. Dies gilt insbesondere für Messungen im geodätischen Bereich oder im Bauwesen.

Allgemein werden gattungsgemässe optische Neigungsmesser des Stands der Technik realisiert, indem eine Flüssigkeitsoberfläche in der Pupille eines optischen Subsystems positioniert wird. Durch diese Flüssigkeit als Medium wird eine Phasenverschiebung einer von einer Strahlungsquelle einfallenden Strahlung bewirkt, wobei die Wechselwirkung von Strahlung und Medium in Reflexion oder Transmission erfolgen kann und folgende Beziehungen gelten:

$$\text{in Reflexion:} \qquad \Phi = 2 \cdot P(x) \qquad\qquad (1)$$

$$\text{in Transmission:} \qquad \Phi = (n-1) \cdot P(x) \qquad\qquad (2)$$

Die Grässe $\Phi$ bezeichnet die Phasenverschiebung, n den Brechungsindex der Flüssigkeit und P(x) die Formfunktion der Flüssigkeitsoberfläche, wobei diese gemäss

$$P(x) = 2\pi / \lambda \cdot x \cdot \cos(\alpha) \qquad\qquad (3)$$

definiert ist und $\lambda$ die Wellenlänge der einfallenden Strahlung, x die laterale Pupillenkoordinate und $\alpha$ den Neigungswinkel bezüglich einer Bezugsgeraden bezeichnen.

Aus der apparativ gemessenen Phasenverschiebung $\Phi$ kann nun gemäss Gleichung (3) auf den Winkel der Flüssigkeitsoberfläche gegenüber der Bezugsgeraden geschlossen werden.

In den Patentschriften DE 196 10 941 C2, DE 19b 21 189 und DE 198 19 610 C1 werden gattungsgemässe optische Neigungsmesser beschrieben, bei denen die Richtungsänderung eines Lichtstrahls durch Reflexion an einer neigungsabhängigen Oberfläche einer Flüssigkeit erfolgt. Dabei wird eine Struktur auf ein- oder zweidimensionale Sensorelemente abgebildet. Aus der Veränderung der Lage des Abbildes dieser Struktur wird auf die Neigung geschlossen.

Aus der Offenlegungsschrift DE 41 10 858 ist ein zweiachsiger Neigungsmesser bekannt, bei dem eine geometrische Figur über einen neigungsempfindlichen und strahlablenkenden Sensor auf ein Lineararray projiziert wird. Der Sensor beinhaltet eine Flüssigkeit, deren Läge relativ zum Gerät zu einer Beeinflussung bzw. Ablenkung der Projektion der Figur auf dem Lineararray führt.

Die internationale PCT-Patentanmeldung Nr. PCT/EP03/05206 beschreibt einen optischen Neigungsmesser, bei dem eine Grenzschicht zwischen zwei Medien auf eine Kamera abgebildet wird. Aus den Parametern dieser Grenzschicht, wie z.B. deren Lage und Form, wird die Neigung eines mit einem solchen Neigungsmesser ausgestatteten Gerätes abgeleitet.

In diesen gattungsgemässen Neigungsmessern werden Flüssigkeiten verwendet, bei denen die neigungsabhängige Lage der Flüssigkeitsoberfläche zur Ableitung des Neigungswinkels mittelbar oder unmittelbar herangezogen wird. Als Nachteil stellt sich jedoch heraus, dass die Verwendung einer Flüssigkeitsoberfläche mit einer Vielzahl von Problemen behaftet ist, die vor allem in den dynamischen Eigenschaften der Flüssigkeit begründet sind. So werden beispielsweise durch Vibrationen oder durch Konvektion Abweichungen der Oberfläche von einer idealen Ebene bewirkt, die zu einer entsprechenden Beeinflussung der reflektierten oder transmittierten Strahlung führen.

Durch diese Einflüsse treten verschiedene Störungen der Wellenfront auf. Eine statistische Unebenheit der Flüssigkeitsoberfläche führt zu einem ortsabhängig variierenden Winkel der Oberfläche, der die Annahme eines für die gesamte Flüssigkeitsoberfläche gleichen Neigungswinkels $\alpha$ nicht mehr zulässt. Darüber hinaus treten bei Beschleunigungen des Mediums oder beim Auftreten von thermischen Gradienten Deformationen der Oberfläche auf, die sich grundsätzlich als asphärische Aberrationen höherer Ordnung modellieren lassen, bisher aber nicht berücksichtigt werden. Durch eine so gestörte Oberfläche wird das Abbild einer Struktur auf einem Sensor verzerrt, unscharf oder der Kontrast herabgesetzt, so dass die Messung mit Schwierigkeiten behaftet ist.

Bisherige Ansätze zur Kompensation betreffen beispielsweise handhabungstechnische Massnahmen zur direkten Verringerung der Effekte, wie z.B. die Einführung von Totzeiten, in denen sich ein Neigungsmesser nach Inbetriebnahme aufwärmt, oder geräteseitige Auslegungen, wie z.B. eine hinreichend grosse Dimensionierung der Flüssigkeitsbehälter. Ausserdem kann der mögliche Einsatzbereich eines Neigungsmessers beschränkt werden, z.B. hinsichtlich der zulässigen Vibration oder Beschleunigung.

Die Aufgaben der vorliegenden Erfindung bestehen allgemein in der Verbesserung eines gattungsgemässen optischen Neigungsmessers.

Insbesondere besteht eine Aufgabe in der Bereitstellung eines Neigungsmessers, der eine verbesserte Messgenauigkeit aufweist.

Weitere Aufgaben bestehen in der weitergehenden Miniaturisierbarkeit eines gattungsgemässen Neigungsmessers und in der Vereinfachung seines Aufbaus.

Eine weitere Aufgabe besteht in der Bereitstellung eines Neigungsmessers, bei dem zeitliche Nutzungsbeschränkungen, insbesondere aufgrund thermischer Effekte, reduziert oder vermieden sind.

Eine weitere Aufgabe besteht darin, einen Neigungsmesser bereitzustellen, der einen gegenüber dem Stand der Technik erweiterten Anwendungsbereich besitzt, insbesondere hinsichtlich der mechanischen Beanspruchung durch Vibrationen.

Eine weitere Aufgabe besteht in der Bereitstellung eines Verfahrens, das eine algorithmische oder elektronische Berücksichtigung von Störungen einer Wellenfront in einem Neigungsmesser erlaubt.

Eine weitere Aufgabe der vorliegenden Erfindung besteht darin, eine bauliche Integrierbarkeit in geodätische oder bautechnische Geräte zu gewährleisten. Dies betrifft insbesondere die Nutzung bereits vorhandener elektronischer Komponenten als Auswerteeinrichtungen.

Diese Aufgaben werden erfindungsgemäss durch kennzeichnende Merkmale der Ansprüche 1, und 13 oder durch kennzeichnende Merkmale der Unteransprüche gelöst.

Die vorliegende Erfindung betrifft einen optischen Neigungsmesser. Durch eine Strahlungsquelle wird Strahlung erzeugt, mit der eine Wellenfront über ein Medium, dessen Lage neigungsabhängig ist, auf einen Detektor abgebildet wird, wobei dieser Detektor als ein- oder mehrdimensionale, insbesondere flächige Kamera ausgebildet werden kann. Das Medium wird durch einen Behälter aufgenommen. Dieser Behälter kann beispielsweise aus einer Dose zur Aufnahme einer Flüssigkeit bestehen. Die Abbildung muss dabei nicht einer Abbildung im optisch exakten Sinne entsprechen. Wesentlich ist die Durchleuchtung des Behälters mit wenigstens einem darin befindlichen oder von diesem gehaltenen ersten Medium oder die Reflexion der Strahlung an einer Oberfläche bzw. Grenzschicht dieses Mediums, nach der eine Detektion der Wellenfront so erfolgt, dass aus dieser auf eine Neigung geschlossen werden kann.

Die Struktur kann der Strahlung extern aufgeprägt werden, z.B. durch eine Blende oder einen Transmissions- bzw. Reflexionscode, oder aber auch aus einer der Strahlung inhärenten Struktur bestehen. Wesentlich ist eine Struktur des Strahlungsfeldes, die nach Wechselwirkung mit dem neigungsabhängigen Medium so in ihrer Abbildung auf dem Detektor verändert ist, dass aus dieser Veränderung ein Rückschluss auf die Lage des Mediums erfolgen kann. Die Neigung wird dabei bezüglich einer Bezugsgerade bestimmt, die als Referenz dient und die im Regelfall mit einer Bezugsgrösse eines Gerätes, z.B. einer Strichplatte oder einer Ausrichtkante, zusammenfällt.

Die verwendete Strahlung kann im sichtbaren aber auch im nichtsichtbaren Spektralbereich liegen und wird im Regelfall durch die technischen und physikalischen Parameter von Strahlungsquelle, Detektor und Medium bestimmt. Als Strahlungsquelle können neben herkömmlichen Lampen verschiedenen Typs auch lichtemittierende Dioden oder Laser, insbesondere Halbleiterlaser, verwendet werden, wobei eine geräteseitig vorteilhafte Führung der Strahlung durch optische Elemente, wie z.B. Lichtleiter, erfolgen kann. Je nach Realisierungsform wird mit dieser Strahlung das Medium durchleuchtet oder aber das Medium dient Reflexion der Strahlung.

Beispiele für als Medium geeignete Flüssigkeiten stellen Quecksilber, Wasser oder Siliconöl dar. Für die Feststellung der Lage des Mediums kann sowohl die Reflexion an einer Grenzschicht als auch ein Durchgang durch das Medium oder eine Kombination aus beidem verwendet werden.

Das Bild der Struktur wird nach dieser Reflexion und/oder Transmission auf die Kamera projiziert und dort aufgenommen und in elektronische Signale umgewandelt. Als eine geeignete Kamera kann beispielsweise eine CCD-Kamera oder eine CMOS-Kamera dienen. Eine solche Kamera ist beispielsweise als CMOS-Monochrom-Bildsensor ADCS 2120 der Firma Agilent erhältlich, die über ein Feld aus 640 x 480 Pixelpunkten verfügt.

Die von der Kamera erzeugten Signale werden von einer Auswerteeinheit analysiert und hinsichtlich der Neigung des Gerätes ausgewertet. Hierfür kann ein eigener Baustein bzw. eine eigene Komponente verwendet werden. Alternativ kann aber auch auf eventuell vorhandene Komponenten anderer Geräte zurückgegriffen werden. Beispielsweise kann die Funktion dieser Auswerteeinheit bei einem in einen Entfernungsmesser eingebauten Neigungsmesser auch von der für die Entfernungsmessung verwendeten Elektronik mitübernommen werden. Gleichermassen ist es möglich als Strahlungsquelle auch bereits für andere Zwecke verwendete Quellen zu verwenden. So kann im Beispiel des Entfernungsmessers ein Teil des dort ggf. zur Distanzmessung verwendeten Laserlichtes ausgekoppelt und, eventuell nach einer Streuung oder Strahlaufweitung, zur Abbildung verwendet werden.

Erfindungsgemäss werden störende Einflüsse der Wechselwirkung des Strahlungsfeldes mit dem Medium durch eine Analyse von Informationen über die Wellenfront der Strahlung berücksichtigt und so der Einfluss einer gestörten Flüssigkeitsoberfläche kompensiert. Dabei stehen verschiedene geeignete Ansätze zur algorithmischen oder schaltungstechnischen Umsetzung zur Verfügung.

Die Beleuchtung der Struktur erfolgt vorteilhafterweise mit einer ebenen oder leicht sphärischen Welle, die aber nach der Wechselwirkung mit dem Medium Aberrationen aufweisen kann, die z.B. durch Unebenheiten der Oberfläche des Mediums aber auch durch Inhomogenitäten im Inneren des Mediums, wie sie beispielsweise durch Konvektion erzeugt werden, hervorgerufen werden können. Diese Störungen der Oberfläche bzw. des Inneren des Mediums treten beispielsweise durch Temperaturgradienten während der Einschaltphase des Gerätes auf oder werden durch externe Einflüsse, wie z.B. Vibrationen, aufgeprägt. Um diese Einflüsse in einem tolerierbaren Bereich zu halten, werden bei Neigungsmessern des Stands der Technik die Behälterabmessungen hinreichend gross gewählt, so dass eine Miniaturisierung bisher an Grenzen stösst. Eine ergänzende oder alternative Massnahme besteht in der Inkaufnahme von Totzeiten des Neigungsmessers, während derer ein Einschwing- bzw. Ausgleichsvorgang stattfindet und die Messgenauigkeit eingeschränkt ist.

Ein erfindungsgemässer Neigungsmesser verwendet einen Detektor, der als Wellenfrontsensor ausgebildet ist bzw. einen Wellenfrontsensor aufweist, zur Ableitung von Informationen über die Wellenfront. Detektor bzw. Wellenfrontsensor können vorteilhaft direkt nach dem Medium angeordnet werden. Um weitere Beeinträchtigungen der Abbildungsqualität zu vermeiden, ist es darüber hinaus vorteilhaft, beim Durchstrahlen des Mediums den Strahlgang zu wählen, das er senkrecht zur Oberfläche des Mediums geführt wird und nach Verlassen des Mediums direkt auf den Wellenfrontsensor trifft.

Ein Beispiel für einen geeigneten Wellenfrontsensor stellt ein Shack-Hartmann-Wellenfrontsensor (SHS) dar, obwohl erfindungsgemäss grundsätzlich auch andere Typen von Sensoren verwendet werden können. Ein Shack-Hartmann-Wellenfrontsensor weist ein Mikrolinsenarray auf, durch das eine Vielzahl von Subaperturen gebildet wird. Diese Mikrolinsen können dabei sowohl rein zeilenartig und damit linear als auch in Form einer Matrix und damit flächenhaft angeordnet sein. Durch eine geeignete Wahl der Brennweiten des Mikrolinsenarrays lässt sich eine ausreichend hohe Winkelauflösung einstellen. Bei hinreichender Kenntnis der Wellenfront können störende Aberrationen der Wellenfront wegkalibriert werden. Meist werden die Linsen äquidistant in einer zweidimensionalen lateralen Anordnung verwendet, wobei eine Matrix von Fokalpunkten erzeugt wird. Die Verschiebung jedes Fokalpunktes von der Achse der Linse ist ein Mass für die Verkippung der Wellenfront innerhalb der Apertur dieser Linse. Mit geeigneten Algorithmen kann aus der Summe der Fokalpunkte die gesamte Wellenfront näherungsweise rekonstruiert werden. Dabei kann durch die Abtastung der Wellenfront mit den vielen Subaperturen eine weitgehende oder vollständige Rekonstruktion der Topographie der Öloberfläche bzw. der Wellenfront erfolgen oder aber nur ein Teil der Information, z.B. zur Auswahl von Bildpunkten des Detektors mit nicht gestörter Abbildung, verwendet werden.

Zur Detektion der Lage der Fokalpunkte können CCD- oder CMOS-Sensoren verwendet werden, wobei für jede Subapertur ein Array aus mindestens 2X2-Pixeln zum Einsatz kommt. In dieser Auslegung entspricht dies einem Quadrantensensor. Je nach Auflösungserfordernis können jedoch auch grössere Zahlen von Pixeln pro Subapertur verwendet werden. Zur Steigerung der Auslesegeschwindigkeit und zur Verringerung des Rauschens ist eine Zusammenfassung zu Überstrukturen von Pixeln realisierbar. Gleichfalls ist auch eine Verwendung von rein linearen, zeilenartigen Wellenfrontsensoren geeignet.

Durch die Verwendung eines Wellenfrontsensors kann auch der apparative Aufwand verringert werden, da keine 4f-Optik verwendet werden muss und die Mikrolinsenarrays einfach und preiswert durch Replikaverfahren hergestellt werden können.

Durch den Wellenfrontsensor werden Informationen über Parameter bzw. die Gestalt der Wellenfront bereitgestellt, die algorithmisch oder schaltungstechnisch zu einer Kompensation der Aberrationen verwendet werden können. Zum einen kann die Wellenfront hinsichtlich ihrer Formfunktion vollständig oder teilweise analysiert werden. Im allgemeinen kann eine Wellenfront $W(x,y)$ durch eine Summe Polynome höherer Ordnung approximiert werden. Eine mögliche Ableitung ist beispielsweise mit Hilfe von Zernike-Polynomen möglich. Dabei wird eine Wellenfront $W(x,y)$ als Summe

$$W(x,y) = \sum_{0}^{\infty} C_n Z_n(x,y) \qquad (4)$$

mit den Koeffizienten $C_n$ dargestellt, wobei die ersten zehn Polynome $Z_n(x,y)$ in kartesischen Koordinaten wie folgt definiert werden können

$$Z_1(x,y) = y$$
$$Z_2(x,y) = x$$
$$Z_3(x,y) = -x^2 + y^2$$
$$Z_4(x,y) = 2xy$$
$$Z_5(x,y) = -1 + 2x^2 + 2y^2$$
$$Z_6(x,y) = -3x^2y + y^3 \qquad (5)$$
$$Z_7(x,y) = -x^3 + 3xy^2$$
$$Z_8(x,y) = -2y + 3x^2y + 3y^3$$
$$Z_9(x,y) = -2x + 3x^3 + 3xy^2$$
$$Z_{10}(x,y) = x^4 - 6x^2y^2 + y^4$$

Hierbei können speziellen optischen Fehlern auch entsprechenden Koeffizienten zuordnen, wie z.B. $Z_5$ hinsichtlich des Astigmatismus.

Neben der Rekonstruktion der Wellenfront kann auch eine reine Erkennung von Pixeln erfolgen, deren zugeordnete Apertur einen ebenen Abschnitt bzw. einen Anteil der Wellenfront ohne Verkippung bzw. Störung erfasst. Damit kann bewirkt werden, dass nur der Inhalt von solchen Pixeln für eine Auswertung verwendet wird und die Störungen bereits sehr nahe an der Hardware eliminiert werden.

Darüber hinaus können auch die lokalen Informationen über den Verlauf der Wellenfront korreliert werden. Hierfür stehen geeignete Algorithmen, z.B. zur Wavelet-Transformation, zur Verfügung, die beispielsweise eine Reduzierung des Rauschens erlauben.

Zur Erhöhung der Leistungseigenschaften eines erfindungsgemässen optischen Neigungsmessers kann ein Wellenfrontsensor verwendet werden. Bei diesem Wellenfrontsensor wird dessen Auflösung und Absolutbestimmung der Wellenfront durch eindeutige Zuordnung der Wellenfrontabschnitte erhöht. Wellenfrontsensoren nach dem Shack-Hartmann-Prinzip des Stands der Technik verwenden nur die Positionsbestimmung des Fokalpunktes innerhalb der jeweiligen Subapertur. Die Auflösung ist somit von der Brennweite der einzelnen Mikrolinse und der Anzahl von Mikrolinsen sowie der jeweils einer Mikrolinse zugeordneten Bildpunkte begrenzt. Des weiteren ist ohne Modifizierung der Mikrolinsenarrays wegen der Dark Spots keine absolute Bestimmung der Wellenfront möglich. Bei dem Wellenfrontsensor wird vor den Mikrolinsen ein diffraktives Element eingebracht, durch das bewirkt wird, dass anstelle eines Fokalpünktes in der Subapertur mehrere Fokalpunkte der erzeugten Beugungsordnungen oder auch ganze Beugungsbilder zur Bestimmung der exakten Wellenfront herangezogen werden. Dabei kann ausgenutzt werden, dass neben den einer Mikrolinse jeweils zugeordneten Bildpunkten auch weitere Bildpunkte des Detektors ausgeleuchtet werden. Eine Trennung und Zuordnung der Beleuchtungsstrukturen zu den jeweiligen Subaperturen ist auf algorithmischem Weg mit an sich bekannten Verfahren realisierbar. Vorteilhaft ist eine gut unterscheidbare Ausgestaltung der Beugungsstrukturen, wie sie beispielsweise durch grosse Intensitätsänderungen, z.B. wie bei einem Barcode, realisiert werden können, wobei auch zur Code-Rekonstruktion besonders geeignete Eigenschaften, wie z.B. die Verwendung einer M-Sequenz, erfindungsgemäss berücksichtigt werden können.

Durch das erfindungsgemässe Verfahren bzw. die erfindungsgemässe Vorrichtung kann die Einschwingphase nach Einschalten des Gerätes verkürzt werden. Auch ist es möglich, die Abmessungen des Behälters für das Medium zu verkleinern, so dass eine weitere Miniaturisierbarkeit des Neigungsmessers besteht.

Das erfindungsgemässe Verfahren bzw. eine erfindungsgemässe Vorrichtungen werden nachfolgend anhand von in der Zeichnung schematisch dargestellten Ausführungsbeispielen rein beispielhaft näher beschrieben. Im einzelnen zeigen

Fig.1a-b     die schematische Darstellung eines Neigungsmessers mit Reflexion nach dem Stand der Technik;

Fig.2     die schematische Darstellung eines Neigungsmessers mit Transmission nach dem Stand der Technik;

Fig.3a-b     die schematische Darstellung der erfindungsgemässen Anordnung und Wirkung eines Wellenfrontsensors;

Fig.4     die schematische Darstellung der erfindungsgemässen Nutzung eines Wellenfrontsensors;

Fig.5       die schematische Darstellung einer ersten Ausführungsform eines erfindungsgemässen Neigungsmessers in Seitenansicht;

Fig.6       die schematische Darstellung einer zweiten Ausführungsform eines erfindungsgemässen Neigungsmessers in Seitenansicht;

Fig.7a-b    die schematische Darstellung einer dritten Ausführungsform eines erfindungsgemässen Neigungsmessers in Seiten- und Draufsicht;

Fig.8       eine schematische Darstellung einer Form des erfindungsgemässen Verfahrens; und

Fig.9       die schematische Darstellung eines Wellenfrontsensors.

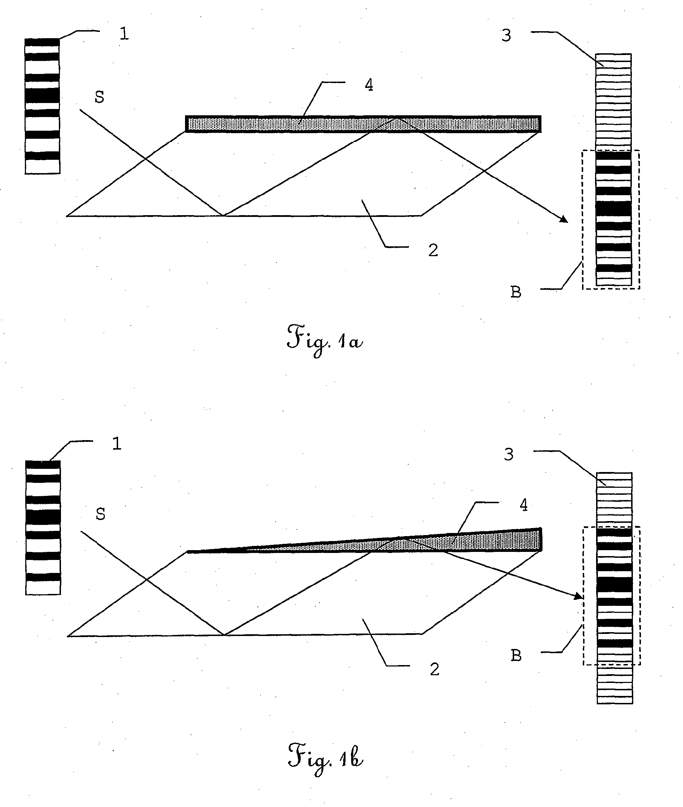

In Fig.1a-b wird ein Neigungsmesser nach dem Stand der Technik beschrieben, der nach dem Prinzip der Reflexion arbeitet. Fig.1a zeigt die Bedingungen bei einer horizontalen Ausrichtung des Neigungsmessers wohingegen Fig.1b die Bedingungen bei einer leichten Neigung erläutert. In Fig.1a fällt von einer Strahlungsquelle emittierte Strahlung S auf einen Strichcode als abzubildende Struktur 1 und wird in einen Prismenkörper 2 geführt, dort an einer Innenfläche reflektiert und auf eine auf der Oberfläche des Prismenkörpers 2 befindliche Flüssigkeitsschicht 4 gelenkt. An der dem Prismenkörper 2 abgewandten Oberfläche der Flüssigkeitsschicht 4 erfolgt eine weitere Reflexion und eine nachfolgende Abbildung auf einen Detektor 3, der hier beispielhaft als Lineararray ausgebildet ist. Die Struktur 1 wird dabei auf dem Detektor 3 als ein Bild B abgebildet. Die Lage des Bildes B ist dabei abhängig von dem Winkel der dem Prismenkörper 2 abgewandten Oberfläche der Flüssigkeitsschicht 4 gegenüber dem Prismenkörper 2.

In Fig.1b wird eine zu Fig.1a ähnliche Situation dargestellt, bei der die Flüssigkeitsschicht 4 durch die Neigung einen keilförmigen Querschnitt erhält. Hierdurch verlaufen die dem Prismenkörper 2 zu- und abgewandten Oberflächen der Flüssigkeitsschicht 4 nicht mehr parallel sondern befinden sich in einem Winkel zueinander. Die an der Innenfläche des Prismenkörpers reflektierte Strahlung S trifft nun auf eine gegenüber Fig.1a anders geneigte Oberfläche der Flüssigkeitsschicht 4 und wird somit unter einem anderen Winkel auf den Detektor 3 projiziert. Damit verschiebt sich auch das Bild B des Strichcodes als Struktur 1. Aus dem ausmass der Verschiebung des Bildes B kann auf die Neigung geschlossen werden.

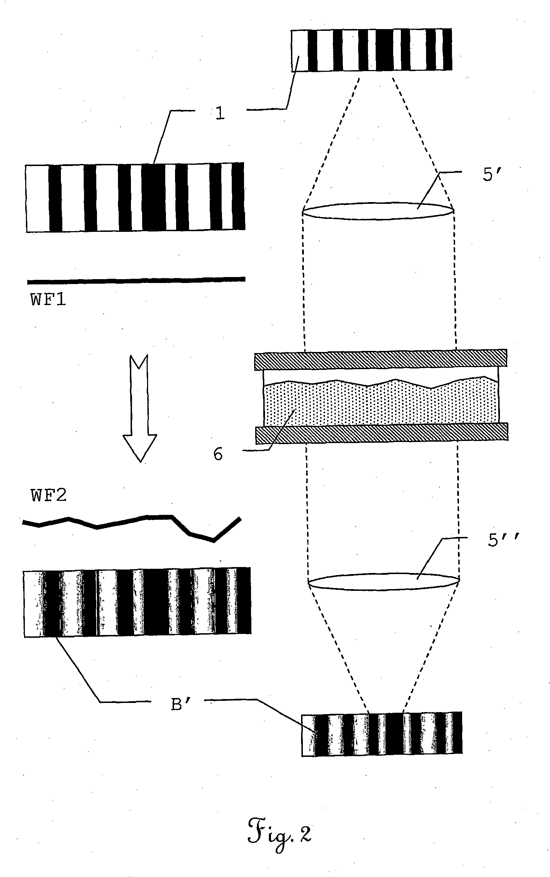

Fig.2 stellt einen Neigungsmesser mit Transmission nach dem Stand der Technik schematisch dar. Ein Strichcode wird als Struktur 1 über ein optisches System mit wenigstens einer kollimierenden Linse 5' durch ein Medium 6 geführt und über ein optisches System mit wenigstens einer fokussierenden Linse 5" auf einen hier nicht explizit dargestellten Detektor abgebildet. Die nach dem Durchgang durch den transmittiven Strichcode noch ebene oder leicht sphärische, aber ungestörte Wellenfront WF1 erfährt durch Unebenheiten der Oberfläche oder Inhomogenitäten innerhalb des gestörten Mediums 6 eine Veränderung ihrer Form, so dass eine gestörte Wellenfront WF2 resultiert. Diese Veränderung der ungestörten Wellenfront WF1 hin zur gestörten Wellenfront WF2 führt zu einem ebenfalls gestörten Bild B' auf dem Detektor. Beispielsweise kann durch diese Einflüsse der Kontrast der Struktur 1 herabgesetzt sein, so dass eine Unterscheidung einzelner Merkmale der Struktur 1 erschwert bzw. verschlechtert ist.

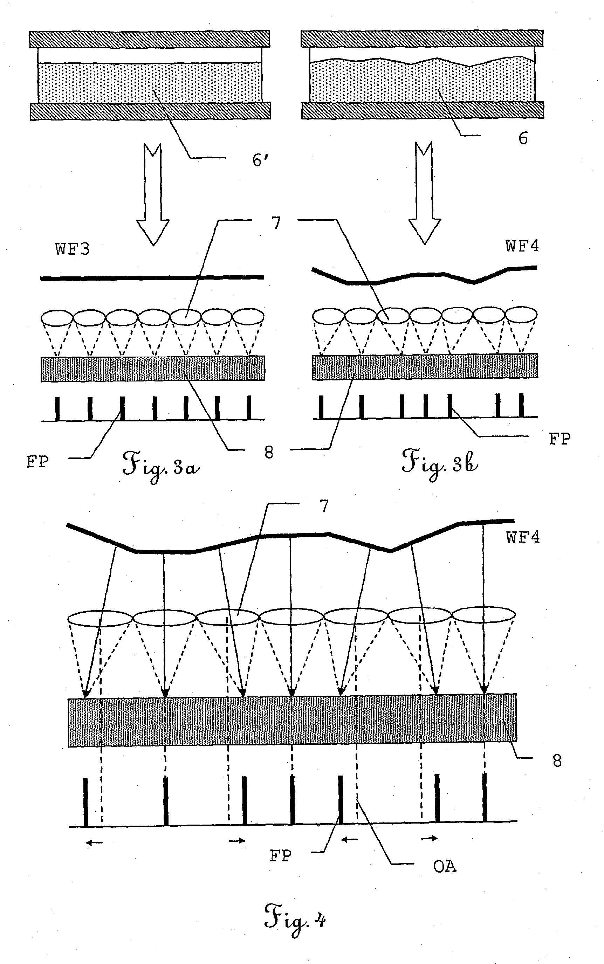

Die erfindungsgemässe Anordnung und Wirkung eines Wellenfrontsensors wird in Fig.3a-b schematisch erläutert, wobei Fig.3a die Situation mit einem ungestörten Medium 6' und Fig.3b mit einem gestörten Medium 6 veranschaulicht.

In Fig.3a fällt die Strahlung auf ein ungestörtes Medium 6' und durchquert dieses, wobei der Durchgang zur Verminderung von Verlusten und Aberrationen im wesentlichen senkrecht zur Oberfläche erfolgt. Nach dem Durchgang ist die Wellenfront WF3 ungestört und im wesentlichen eben. Beim Auftreffen der Strahlung auf den Wellenfrontsensor, der eine Vielzahl von Mikrolinsen 7 mit zugeordneten Subaperturen aufweist, wird die Strahlung einer jeden Subapertur auf eine Kamera 8 abgebildet. Da die Wellenfront WF3 einen ebenen Verlauf aufweist, besitzt sie überall den gleichen parallelen Verlauf und damit identischen Winkel gegenüber dem Wellenfrontsensor, so dass die Fokalpunkte FP auf der Kamera 8 äquidistant und auf der optischen Achse einer jeden Mikrolinse 7 abgebildet werden.

Fig.3b zeigt die Situation für eine gestörte Wellenfront WF4, die nach dem Durchgang durch das gestörte Medium 6 Aberrationen und damit einen nicht mehr ebenen Verlauf aufweist. Die Mikrolinsen 7 projizieren wiederum die von ihrer jeweiligen Subapertur erfasste Strahlung auf den Detektor 8. Da nun für jede dieser Subaperturen der Winkel des erfassten Wellenfrontabschnittes lokal differiert, besitzen auch die zugehörigen Fokalpunkte FP unterschiedliche Abstände. Bei den Subaperturen, die einen nicht parallelen Wellenfrontabschnitt erfassen, fallen Fokalpunkt FP und optische Achse nicht mehr zusammen, so dass eine Abweichung resultiert. Da der einer Subapertur zugeordnete Bereich der Kamera 8 mehrere Pixel aufweist, kann die Lage des Fokalpunktes FP aufgelöst werden und damit auf den Winkel des Wellenfrontabschnitts geschlossen werden.

Diese Verhältnisse werden in Fig.4 nochmals verdeutlicht und die für eine erfindungsgemässe Nutzung ableitbaren Grössen schematisch dargestellt. Der von den Subaperturen der einzelnen Mikrolinsen 7 erfasste Wellenfrontabschnitt wird auf die Kamera 8 abgebildet, wobei je nach konkretem Verlauf Fokalpunkt FP und optische Achse OA zusammen oder auseinanderfallen können. Beispielsweise lässt ein (in diesem Beispiel) links von der optischen Achse OA gelegener Fokalpunkt FP auf eine von rechts einfallende Strahlung schliessen, so eine entsprechende Neigung des jeweiligen Wellenfrontabschnittes abgeleitet werden kann. Das Ausmass des Auseinanderfallens von Fokalpunkt FP und optischer Achse OA stellt dabei eine Funktion des Winkels des Wellenfrontabschnittes dar.

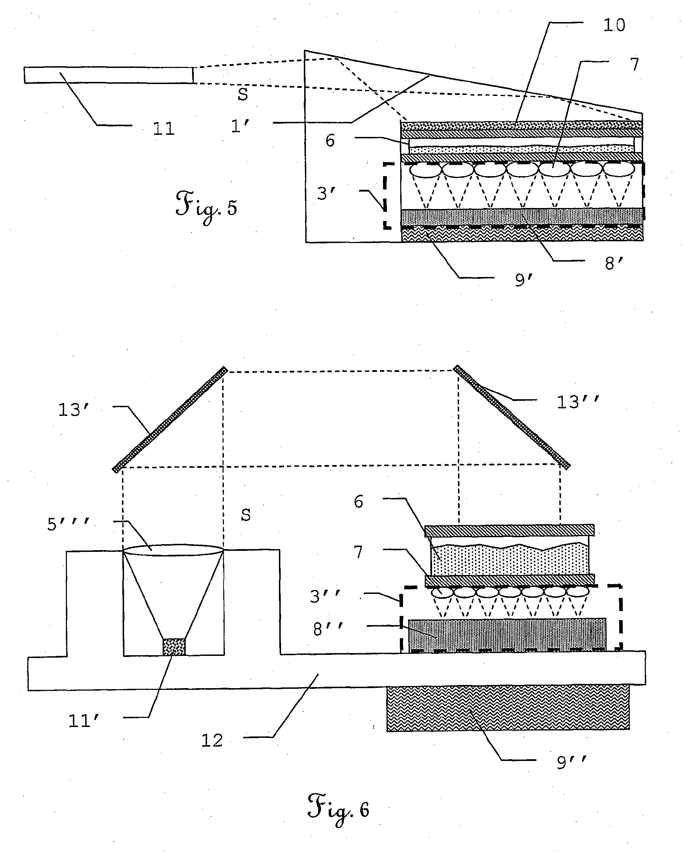

Fig.5 zeigt eine erste Ausführungsform eines erfindungsgemässen optischen Neigungsmessers. Durch die in einem Lichtleiter als lokaler Strahlungsquelle 11 geführte Strahlung S wird eine schräge, reflektierende Fläche des Gehäuses eines erfindungsgemässen Neigungsmessers beleuchtet. Der Detektor 3' weist einen Wellenfrontsensor mit einer Kamera 8' und einem vorgeschalteten Array aus Mikrolinsen 7 auf. Auf der dem Strahlungseinfall entgegengesetzten Seite der Kamera 8' ist eine Auswerteeinheit 9' positioniert. Durch eine solche Anordnung der Komponenten ist eine besonders flache Bauweise des Neigungsmessers realisierbar.

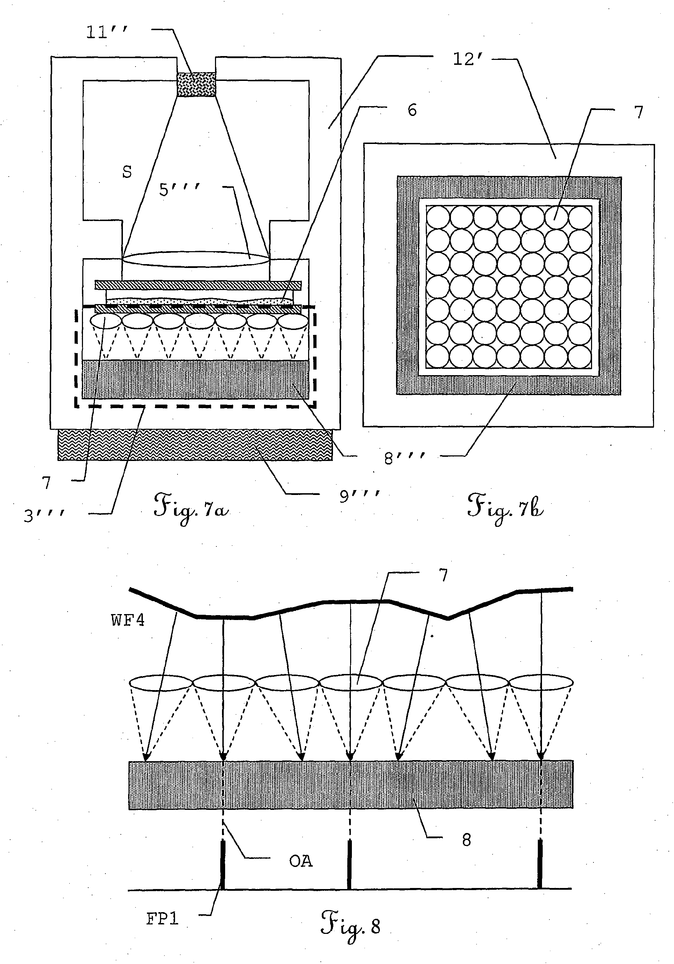

In Fig.6 erfolgt die schematische Darstellung einer zweiten Ausführungsform eines erfindungsgemässen optischen Neigungsmessers mit der Integration aller Komponenten auf einer Platte als gemeinsamer Basis 12 in Seitenansicht. Durch eine Strahlungsquelle 11' wird sichtbare oder nicht sichtbare Strahlung S senkrecht zur Basis 12 emittiert. Die Strahlung S wird durch eine Linse 5''' kollimiert und über ein erstes Umlenkelement 13' und ein zweites Umlenkelement 13" wieder so umgelenkt, dass sie senkrecht zur Basis 1 einfällt. Im Bereich der einfallenden Strahlung ist auf der Basis 1 ein Behälter für das Medium 6' mit einer zur Basis orientierten ersten Oberfläche und einer zum zweiten Umlenkelement 13" orientierten zweiten Oberfläche angebracht. Zwischen Basis 12 und dem Behälter bzw. dessen erster Oberfläche befindet sich ein Detektor 3" mit einem Wellenfrontsensor aus einer Kamera 8" und einem vorgeschaltetem Array von Mikrolinsen 7. Der Detektor 3" ist mit einer Auswerteeinheit 9" verbunden. Aus Gründen der Platzersparnis sind die zur Strahlerzeugung, zum Strahlgang und zum Strahlungsempfang gehörigen Komponenten auf der einen Seite der Basis 12, die Auswerteeinheit 9" aber auf der entgegengesetzten Seite der Basis 12 angebracht, grundsätzlich kann jedoch auch eine andere Anordnung der Komponenten oder der Auswerteeinheit 9" gewählt werden. Diese Anordnung bietet somit den Vorteil der Integration aller elektronischen Bauteile auf einer gemeinsamen Basis 12, die beispielsweise auch als Leiterplatte ausgebildet sein kann. Hierdurch kann ein einfacher und mechanisch unempfindlicher Aufbau realisiert werden. Die Umlenkelemente 13' und 13" können als reflektierende Bauelemente, z.B. als Prismen oder Spiegel ausgebildet sein. Grundsätzlich kann bei Verzicht der Montage auf eine gemeinsame Basis 12 jedoch auch eine direkte Montage der Komponenten aufeinander erfolgen, wie dies in einer zweiten erfindungsgemässen Ausführungsform in Fig.5 oder Fig.7a-b dargestellt wird.

Fig.7a-b zeigt eine dritte Ausführungsform eines erfindungsgemässen optischen Neigungsmessers mit koaxialer Anordnung aller Komponenten. Die Basis 12' ist im wesentlichen u-förmig ausgebildet und nimmt zwischen den beiden Schenkeln eine Strahlungsquelle 11" auf. Die Strahlungsquelle emittiert Strahlung S, die von einer Linse 5''' kollimiert wird. Die kollimierte Strahlung S wird danach durch das Medium 6' geführt, das in einem Behälter mittelbar oder unmittelbar auf dem Detektor 3''' angebracht ist, der einen Wellenfrontsensor mit einer Kamera 8''' und flächig angeordneten Mikrolinsen 7 aufweist. Auf der dem Detektor 3''' entgegengesetzten Seite der Basis 12' ist eine Auswerteeinheit 9''' angebracht.

Fig.7b zeigt eine Draufsicht auf die Anordnung der Mikrolinsen 7 eines Wellenfrontsensors bei der dritten Ausführungsform eines erfindungsgemässen Neigungsmessers, bei dem Strahlungsquelle, Linse und Behälter mit dem Medium in der Darstellung weggelassen wurden. Die Strahlung wird hierbei über die flächig angeordneten Mikrolinsen 7 auf die Kamera 8''' des Detektors abgebildet.

Eine mögliche Form des erfindungsgemässen Verfahrens wird in Fix.8 schematisch erläutert. Bei einem Detektoraufbau nach dem in Fig.4 erläuterten Prinzip mit Wellenfrontsensor werden die einzelnen Pixel der Kamera 8 nur dann in die Auswertung einbezogen, wenn der Fokalpunkt FP1 mit der optischen Achse OA der jeweiligen Mikrolinse 7 zusammenfällt oder deren Abweichung voneinander innerhalb einer vorgegebenen Toleranz liegt. Zur Auswertung werden dann nur die Pixel ausgelesen oder weiterverarbeitet, die dieser Bedingung genügen, so dass nur der Teil des Bildes verwendet wird, der ohne Aberration aufgenommen werden kann. Dabei ist es möglich auch verschiedene Pixel miteinander zu korrelieren, insbesondere können Pixel zu grösseren Überstrukturen zusammengefasst werden. Auch kann auf das so gewonnen Bild an sich bekannte Verfahren der Bildverarbeitung angewendet werden, um eine Verbesserung der optischen Parameter zu erhalten.

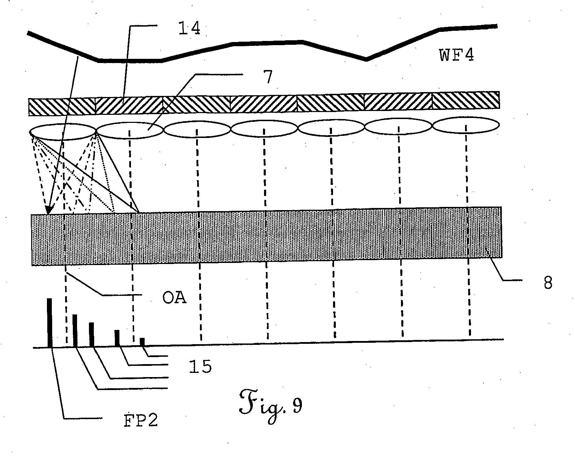

Fig.9 zeigt schematisch eine Ausführungsform des Wellenfrontsensors. Vor den Mikrolinsen 7 ist ein diffraktives Element 14 angeordnet, durch das die von der Wellenfront WF4 kommende Strahlung gebeugt wird. Dieses diffraktive Element kann beispielsweise ein Hologramm, ein Gitter, insbesondere ein Dammann-Gitter, oder eine andere gradientenoptische Struktur sein. Neben der direkten Positionierung über den Mikrolinsen 7 kann auch eine Anbringung an anderer Stelle im Strahlgang, z.B. auf einem der Umlenkspiegel der Fig.6 oder in unmittelbarer Nähe des Mediums, z.B. auf einem Glas des Behälters, erfolgen. Durch die Beugungswirkung entstehen auf der Kamera 8 anstelle oder neben dem ungestörten Fokalpunkt FP2 mehrere Intensitäts-Strukturen 15, die miteinander korreliert sind. Je nach Auslegung des diffraktiven Elements 14 und der Gestalt der Wellenfront WF4 können diese Strukturen auch in Bereichen abgebildet werden, die bei einem Wellenfrontsensor ohne diffraktives Element 14 jeweils ausschliesslich einer anderen Subapertur zugeordnet wären. Neben den höheren Beugungsordnungen können diese Strukturen beispielsweise auch ausgedehnte Fourierbilder des diffraktiven Elementes sein. Hierdurch wird es möglich, für jede Subapertur einen grösseren Bereich der Kamera 8 zur Detektion zu verwenden und so eine höhere Auflösung, grössere detektierbare Winkelbereiche und/ oder einen hohen Dynamik-Bereich zu erreichen.

Die dargestellten Ausführungsformen stellen nur Beispiele für erfindungsgemässe Realisierungen dar und sind daher nicht abschliessend und einschränkend zu verstehen. Darüber hinaus kann der Fachmann weitere erfindungsgemässe Ausführungsformen, z.B. unter Verwendung anderer Strahlgänge oder Umlenkelemente, wie beispielsweise Prismen, streuender Flächen oder Lichtleitern, oder alternativer Formen des Detektors und des Wellenfrontsensors ableiten.

In den Figuren sind die Linsen des Wellenfrontsensors und insbesondere deren Zahl und Grösse rein schematisch dargestellt. In den realen Ausführungsformen ist die Zahl der Linsen meist höher, so dass höhere Auflösungen der Lage bzw. Winkel erzielbar sind.

## Patentansprüche

1.  Optischer Neigungsmesser mit

    - einer Strahlungsquelle (11,11',11") zur Erzeugung von Strahlung (S), insbesondere einem Halbleiterlaser oder einer LED;
    - einem Medium (6,6'), dessen optische Grenzfläche neigungsabhängig ist;
    - einem Detektor (3',3",3'"), vorzugsweise mit einer CMOS- oder CCD-Mikro-Kamera, zum Aufnehmen und Umwandeln einer Abbildung in Signale; und
    - einer Auswerteeinheit (9',9",9'") zur Bestimmung der Neigung;

    wobei Strahlungsquelle (11,11',11") und Detektor (3',3",3'") so angeordnet sind, daß die Wellenfront (WF2, WF3, WF4) vermittels zumindest eines Teils des Mediums (6,6') mittelbar oder unmittelbar, in Reflexion und/oder Transmission auf den Detektor abgebildet (3', 3", 3'") wird;
    **dadurch gekennzeichnet, daß**
    der Detektor (3', 3", 3'") einen Wellenfrontsensor aufweist oder der Detektor (3', 3", 3'") als Wellenfrontsensor ausgebildet ist.

2.  Optischer Neigungsmesser nach Anspruch 1,
    **dadurch gekennzeichnet, daß**
    das Medium (6,6') eine neigungsempfindliche Oberfläche aufweist, insbesondere eine Flüssigkeit ist.

3.  Optischer Neigungsmesser nach Anspruch 1 oder 2,
    **dadurch gekennzeichnet, daß**
    Strahlungsquelle (11,11',11"), Medium (6, 6') und Detektor (3',3",3'") so angeordnet sind, daß die Strahlung (S) bei einem Durchgang durch das Medium (6,6') im wesentlichen senkrecht zu wenigstens einer Oberfläche des Mediums (6,6') geführt wird.

4.  Optischer Neigungsmesser nach einem der vorangehenden Ansprüche,
    **dadurch gekennzeichnet, daß**
    der Detektor (3', 3", 3'") wenigstens ein diffraktives Element (14) aufweist, wobei das diffraktive Element (14) auf einem Array aus Mikrolinsen (7) angeordnet ist.

5.  Optischer Neigungsmesser nach einem der vorangehenden Ansprüche,
    **dadurch gekennzeichnet, daß**
    der Detektor (3', 3", 3'") als Shack-Hartmann-Wellenfrontsensor ausgebildet ist oder einen Shack-Hartmann-Wellenfrontsensor aufweist.

6.  Optischer Neigungsmesser nach einem der vorangehenden Ansprüche,
    **dadurch gekennzeichnet, daß**
    der Detektor (3',3",3'") mittelbar oder unmittelbar auf einem das Medium (6,6') enthaltenden Behälter angebracht ist.

7.  Optischer Neigungsmesser nach einem der vorangehenden Ansprüche,
    **dadurch gekennzeichnet, daß**

der Detektor (3',3",3"') eine zweidimensional auflösende Detektorfläche aufweist, insbesondere mit einer zu einer Oberfläche des Mediums (6,6') parallelen Orientierung der Detektorfläche.

**8.** Optischer Neigungsmesser nach einem der vorangehenden Ansprüche,
**dadurch gekennzeichnet, daß**
Strahlungsquelle (11,11',11") und Detektor (3',3",3"') auf einer gemeinsamen Basis (12,12'), vorzugsweise einer Leiterplatte, angeordnet sind.

**9.** Optischer Neigungsmesser nach Anspruch 8,
**dadurch gekennzeichnet, daß**
Strahlungsquelle (11, 11', 11") und Detektor (3', 3", 3"') so angeordnet sind, dass die erzeugte Strahlung (S) senkrecht zur Oberfläche der Basis (12,12') emittiert wird und die Empfangsrichtung des Detektors (3',3",3"') senkrecht zur Oberfläche der Basis (12,12') orientiert ist.

**10.** Optischer Neigungsmesser nach einem der vorangehenden Ansprüche,
**dadurch gekennzeichnet, daß**
im Strahlgang von der Strahlungsquelle (11,11',11") zum Detektor (3',3",3"') wenigstens ein Umlenkelement (13', 13") angeordnet ist.

**11.** Optischer Neigungsmesser nach einem der vorangehenden Ansprüche,
**dadurch gekennzeichnet, daß**
im Strahlgang von der Strahlungsquelle (11,11',11") zum Detektor (3',3" ,3" ') wenigstens ein diffraktives und/oder gradientenoptisches Element (10), insbesondere eine Fresnel-Linse, angeordnet ist.

**12.** Geodätisches Gerät, insbesondere Entfernungsmesser oder Lotstock, mit einem Neigungsmesser nach einem der Ansprüche 1 bis 11.

**13.** Verfahren zur Messung der Neigung eines Gerätes, insbesondere eines geodätischen Gerätes, mit

- einer Strahlungsquelle (11,11',11'') zur Erzeugung von Strahlung (S), insbesondere einem Halbleiterlaser oder einer LED;
- einem Medium (6,6'), dessen optische Grenzfläche neigungsabhängig ist;
- einem Detektor (3',3",3"'), vorzugsweise mit einer CMOS- oder CCD-Mikro-Kamera, zum Aufnehmen und Umwandeln einer Abbildung in Signale; und
- einer Auswerteeinheit (9',9",9"')zur Bestimmung der Neigung;

wobei Strahlungsquelle (11,11',11") und Detektor (3',3",3"') so angeordnet sind, daß die Wellenfront (WF2, WF3, WF4) vermittels zumindest eines Teils des Mediums (6,6') mittelbar oder unmittelbar, in Reflexion und/oder Transmission auf den Detektor (3', 3", 3"') abgebildet wird;
mit den Schritten

- Abbilden der Wellenfront (WF2, WF3, WF4) auf den Detektor (3',3",3"'),
- Aufnehmen der Signale des Detektors (3',3",3"'),
- Auswerten der Signale und Bestimmen der Neigung des Gerätes durch die Auswerteeinheit (9',9",9"'),

**dadurch gekennzeichnet, dass**
beim Auswerten der Signale Informationen über die Wellenfront (WF2,WF3,WF4), insbesondere die Formfunktion der Wellenfront (WF2,WF3,WF4), abgeleitet werden.

**14.** Verfahren nach Anspruch 13,
**dadurch gekennzeichnet, dass**
beim Auswerten der Signale eine Analyse der Abweichung der Wellenfront (WF2,WF3,WF4) von der Wellenfront (WF1) vor einer Wechselwirkung mit dem Medium erfolgt.

**15.** Verfahren nach Anspruch 13 oder 14,
**dadurch gekennzeichnet, dass**
beim Aufnehmen der Signale und/oder beim Auswerten der Signale eine Rekonstruktion der Wellenfront (WF1) vor einer Wechselwirkung mit dem Medium (6,6') erfolgt.

**16.** Verfahren nach einem der Ansprüche 13 bis 15,
**dadurch gekennzeichnet, dass**
beim Aufnehmen der Signale und/oder beim Auswerten der Signale eine Auswahl einzelner Bildpunkte des Detektors (3',3'',3''') erfolgt, wobei vorzugsweise nur diese Bildpunkte zum Bestimmen der Neigung des Gerätes verwendet werden.

**17.** Verfahren nach einem der Ansprüche 13 bis 16,
**dadurch gekennzeichnet, dass**
beim Auswerten der Signale eine Ableitung der Formfunktion mittels eines Polynom-Ansatzes erfolgt, insbesondere unter Verwendung von Zernike-Polynomen.

**18.** Verfahren nach einem der Ansprüche 13 bis 17,
**dadurch gekennzeichnet, dass**
beim Aufnehmen der Signale und/oder beim Auswerten der Signale verschiedene Aperturen miteinander korreliert werden.

**19.** Verwendung eines Verfahrens nach einem der Ansprüche 13 bis 18 zur Kompensation von Vibrationen und/oder statistischer Fluktuationen wenigstens einer Oberfläche des Mediums (6,6'), insbesondere aufgrund von Konvektionsprozessen.

**Claims**

**1.** Optical inclinometer, having

- a radiation source (11, 11', 11") for generating radiation (S), in particular a semiconductor laser or an LED;
- a medium (6, 6'), the optical interface of which is inclination-dependent;
- a detector (3', 3", 3'''), preferably with a CMOS or CCD microcamera, for recording and converting an image into signals; and
- an evaluation unit (9', 9", 9''') for determining the inclination;

wherein radiation source (11, 11', 11") and detector (3', 3", 3''') are arranged such that the wavefront (WF2, WF3, WF4) is imaged directly or indirectly, in reflection and/or transmission onto the detector (3', 3 ", 3''') using at least part of the medium (6, 6');
**characterized in that**
the detector (3', 3", 3''') has a wavefront sensor or the detector (3', 3", 3''') is configured as a wavefront sensor.

**2.** Optical inclinometer according to Claim 1,
**characterized in that**
the medium (6, 6') has an inclination-sensitive surface, in particular is a liquid.

**3.** Optical inclinometer according to Claim 1 or 2,
**characterized in that**
radiation source (11, 11', 11"), medium (6, 6') and detector (3', 3", 3''') are arranged such that the radiation (S), when it passes through the medium (6, 6'), is guided substantially perpendicularly to at least one surface of the medium (6, 6').

**4.** Optical inclinometer according to any one of the preceding claims,
**characterized in that**
the detector (3', 3", 3''') has at least one diffractive element (14), wherein the diffractive element (14) is arranged on an array composed of microlenses (7).

**5.** Optical inclinometer according to any one of the preceding claims,
**characterized in that**
the detector (3', 3", 3''') is configured as a Shack-Hartmann wavefront sensor or has a Shack-Hartmann wavefront sensor.

**6.** Optical inclinometer according to any one of the preceding claims,

**characterized in that**
the detector (3', 3", 3''') is mounted directly or indirectly on a container containing the medium (6, 6').

7. Optical inclinometer according to any one of the preceding claims,
   **characterized in that**
   the detector (3', 3", 3''') has a two-dimensionally resolving detector face, in particular with an orientation of the detector face that is parallel to a surface of the medium (6, 6').

8. Optical inclinometer according to any one of the preceding claims,
   **characterized in that**
   radiation source (11, 11', 11") and detector (3', 3", 3''') are arranged on a common base (12, 12'), preferably a printed circuit board.

9. Optical inclinometer according to Claim 8,
   **characterized in that**
   radiation source (11, 11', 11'') and detector (3', 3", 3''') are arranged such that the generated radiation (S) is emitted perpendicularly to the surface of the base (12, 12') and the receiving direction of the detector (3', 3'', 3''') is oriented perpendicularly to the surface of the base (12, 12').

10. Optical inclinometer according to any one of the preceding claims,
    **characterized in that**
    at least one deflection element (13', 13'') is arranged in the beam path from the radiation source (11, 11', 11") to the detector (3',3",3''').

11. Optical inclinometer according to any one of the preceding claims,
    **characterized in that**
    at least one diffractive and/or gradient-index optical element (10), in particular a Fresnel lens, is arranged in the beam path from the radiation source (11, 11', 11") to the detector (3', 3", 3''').

12. Geodetical device, in particular range finder or measuring pole, having an inclinometer according to any one of Claims 1 to 11.

13. Method for measuring the inclination of a device, in particular of a geodetic device, having

    • a radiation source (11, 11', 11") for generating radiation (S), in particular a semiconductor laser or an LED;
    • a medium (6, 6'), the optical interface of which is inclination-dependent;
    • a detector (3', 3", 3'''), preferably with a CMOS or CCD microcamera, for recording and converting an image into signals; and
    • an evaluation unit (9', 9", 9''') for determining the inclination;

    wherein radiation source (11, 11', 11") and detector (3', 3", 3''') are arranged such that the wavefront (WF2, WF3, WF4) is imaged directly or indirectly, in reflection and/or transmission onto the detector (3', 3", 3''') using at least part of the medium (6, 6'); having the steps of

    - imaging the wavefront (WF2, WF3, WF4) onto the detector (3', 3", 3'''),
    - capturing the signals of the detector (3', 3", 3'''),
    - evaluating the signals and determining the inclination of the device using the evaluation unit (9' 9" 9'''),

    **characterized in that**,
    when the signals are evaluated, information relating to the wavefront (WF2, WF3, WF4), in particular the form function of the wavefront (WF2, WF3, WF4), are derived.

14. Method according to Claim 13,
    **characterized in that**,
    when the signals are evaluated, the deviation of the wavefront (WF2, WF3, WF4) from the wavefront (WF1) is analyzed before interaction with the medium.

15. Method according to Claim 13 or 14,

**EP 1 636 544 B1**

**characterized in that**,
when the signals are captured and/or the signals are evaluated, the wavefront (WF1) is reconstructed before interaction with the medium (6, 6').

16. Method according to any one of Claims 13 to 15,
**characterized in that**,
when the signals are captured and/or the signals are evaluated, individual pixels of the detector (3', 3", 3''') are selected, wherein preferably only these pixels are used to determine the inclination of the device.

17. Method according to any one of Claims 13 to 16,
**characterized in that**,
when the signals are evaluated, derivation of the form function using a polynomial approach takes place, in particular using Zernike polynomials.

18. Method according to any one of Claims 13 to 17,
**characterized in that**,
when the signals are captured and/or the signals are evaluated, various apertures are correlated with one another.

19. Use of a method according to any one of Claims 13 to 18 for compensating for vibrations and/or statistical fluctuations of at least one surface of the medium (6, 6'), in particular on account of convection processes.


**Revendications**

1. Inclinomètre optique avec

  • une source de rayonnement (11, 11', 11") pour produire un rayonnement (S), en particulier un laser à semi-conducteur ou une LED,
  • un milieu (6, 6') dont la surface limite optique dépend de l'inclinaison,
  • un détecteur (3', 3", 3'''), de préférence avec une caméra CMOS ou une micro-caméra CDD pour enregistrer et transformer une image en signaux et
  • une unité d'exploitation (9', 9", 9''') pour déterminer l'inclinaison,

la source de rayonnement (11, 11', 11") et le détecteur (3', 3", 3''') étant placés de telle manière que le front d'onde (WF2, WF3, WF4) est représenté au moyen d'au moins une partie du milieu (6, 6') directement ou indirectement en réflexion et/ou en transmission sur le détecteur (3', 3", 3'''),
**caractérisé en ce**
**que** le détecteur (3', 3", 3''') présente un capteur de front d'onde ou que le détecteur (3', 3", 3''') est configuré comme un capteur de front d'onde.

2. Inclinomètre optique selon la revendication 1,
**caractérisé en ce**
**que** le milieu (6, 6') présente une surface sensible à l'inclinaison, en particulier que c'est un liquide.

3. Inclinomètre optique selon la revendication 1 ou 2,
**caractérisé en ce**
**que** la source de rayonnement (11, 11', 11"), le milieu (6, 6') et le détecteur (3', 3", 3''') sont placés de telle manière que le rayonnement (S) est guidé, lors d'un passage par le milieu (6, 6') substantiellement perpendiculairement à au moins une surface du milieu (6, 6').

4. Inclinomètre optique selon l'une des revendications précédentes,
**caractérisé en ce**
**que** le détecteur (3', 3", 3''') présente au moins un élément diffractif (14), l'élément diffractif (14) étant placé sur un arrangement de micro-lentilles (7).

5. Inclinomètre optique selon l'une des revendications précédentes,
**caractérisé en ce**
**que** le détecteur (3', 3", 3''') est configuré comme un analyseur de front d'onde de type Shack-Hartmann ou présente un analyseur de front d'onde de type Shack-Hartmann.

6. Inclinomètre optique selon l'une des revendications précédentes,
   **caractérisé en ce**
   **que** le détecteur (3', 3", 3''') est fixé directement ou indirectement sur un conteneur qui contient le milieu (6, 6').

7. Inclinomètre optique selon l'une des revendications précédentes,
   **caractérisé en ce**
   **que** le détecteur (3', 3", 3''') présente une surface de détecteur à résolution à deux dimensions, en particulier avec une orientation de la surface du détecteur parallèle à une surface du milieu (6, 6').

8. Inclinomètre optique selon l'une des revendications précédentes,
   **caractérisé en ce**
   **que** la source de rayonnement (11, 11', 11") et le détecteur (3', 3", 3''') sont placés sur une base commune (12, 12'), de préférence sur une carte de circuit imprimé.

9. Inclinomètre optique selon la revendication 8,
   **caractérisé en ce**
   **que** la source de rayonnement (11, 11', 11") et le détecteur (3', 3", 3''') sont placés de telle manière que le rayonnement produit (S) est émis perpendiculairement à la surface de la base (12, 12') et que le sens de réception du détecteur (3', 3", 3''') est orienté perpendiculairement à la surface de la base (12, 12').

10. Inclinomètre optique selon l'une des revendications précédentes,
    **caractérisé en ce**
    **qu'**au moins un élément de dérivation (13' ,13") est placé dans la trajectoire des rayons de la source de rayonnement (11, 11', 11") vers le détecteur (3', 3", 3''').

11. Inclinomètre optique selon l'une des revendications précédentes,
    **caractérisé en ce**
    **qu'**au moins un élément diffractif et/ou un élément optique à gradient d'indice (10), en particulier une lentille de Fresnel, est placé dans la trajectoire des rayons de la source de rayonnement (11, 11', 11 ") vers le détecteur (3', 3", 3''').

12. Appareil de géodésie, en particulier télémètre ou canne à plomb, avec un inclinomètre selon l'une des revendications 1 à 11.

13. Procédé pour la mesure de l'inclinaison d'un appareil, en particulier d'un appareil de géodésie, avec

    • une source de rayonnement (11, 11', 11") pour produire un rayonnement (S), en particulier un laser à semi-conducteur ou une LED,
    • un milieu (6, 6') dont la surface limite optique dépend de l'inclinaison,
    • un détecteur (3', 3", 3'''), de préférence avec une caméra CMOS ou une micro-caméra CDD, pour enregistrer et transformer une image en signaux et
    • une unité d'exploitation (9', 9", 9''') pour déterminer l'inclinaison,

    la source de rayonnement (11, 11', 11") et le détecteur (3', 3", 3''') étant placés de telle manière que le front d'onde (WF2, WF3, WF4) est représenté au moyen d'au moins une partie du milieu (6, 6') directement ou indirectement en réflexion et/ou en transmission sur le détecteur (3', 3", 3'''),
    avec les étapes

    - représentation du front d'onde (WF2, WF3, WF4) sur le détecteur (3', 3", 3'''),
    - enregistrement des signaux du détecteur (3', 3", 3'''),
    - exploitation des signaux et détermination de l'inclinaison de l'appareil par l'unité d'exploitation (9', 9", 9'''),

    **caractérisé en ce que**
    des informations sur le front d'onde (WF2, WF3, WF4), en particulier la fonction de la forme du front d'onde (WF2, WF3, WF4), sont dérivées lors de l'exploitation des signaux.

**14.** Procédé selon la revendication 13,
**caractérisé en ce**
**que**, lors de l'exploitation des signaux, une analyse de l'écart entre le front d'onde (WF2, WF3, WF4) et le front d'onde (WF1) est effectuée avant une interaction avec le milieu.

**15.** Procédé selon la revendication 13 ou 14,
**caractérisé en ce**
**que**, lors de l'enregistrement des signaux et/ou lors de l'exploitation des signaux, une reconstruction du front d'onde (WF1) est effectuée avant une interaction avec le milieu (6, 6').

**16.** Procédé selon l'une des revendications 13 à 15,
**caractérisé en ce**
**que**, lors de l'enregistrement des signaux et/ou lors de l'exploitation des signaux, une sélection de points d'image individuels du détecteur (3, 3", 3"') est effectuée, cependant que de préférence seulement ces points d'image sont utilisés pour déterminer l'inclinaison de l'appareil.

**17.** Procédé selon l'une des revendications 13 à 16,
**caractérisé en ce**
**que**, lors de l'exploitation des signaux, une dérivation de la fonction de la forme est effectuée au moyen d'une mise en équation de polynôme, en particulier en utilisant des polynômes de Zernike.

**18.** Procédé selon l'une des revendications 13 à 16,
**caractérisé en ce**
**que**, lors de l'enregistrement des signaux et/ou lors de l'exploitation des signaux, différentes ouvertures sont corrélées l'une avec l'autre.

**19.** Utilisation d'un procédé selon l'une des revendications 13 à 18 pour la compensation de vibrations et/ou de fluctuations statistiques d'au moins une surface du milieu (6, 6'), en particulier en raison de processus de convection.

Fig. 1a

Fig. 1b

Fig. 2

WF3

WF4

7

6'

6

8

FP

FP

*Fig. 3a*

*Fig. 3b*

7

WF4

8

FP

OA

*Fig. 4*

Fig. 5

Fig. 6

11''

S

5'''

12'

6

7

7

8'''

3'''

7

9'''

*Fig. 7a*

*Fig. 7b*

WF4

7

OA

8

FP1

*Fig. 8*

*Fig. 9*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19610941 C2
- DE 19B21189
- DE 19819610 C1
- DE 4110858
- EP 0305206 W